# EUROPEAN PATENT SPECIFICATION

(11) **EP 2 224 727 B1**
(45) Date of publication and mention of the grant of the patent: **16.12.2015**
(21) Application number: 10154144.9
(22) Date of filing: 19.02.2010
(51) Int. Cl.: H04N 5/445, H04N 7/16, H04N 7/00, G11B 27/00, H04N 5/765, H04N 5/783, H04N 21/431, H04N 21/432, H04N 21/4402, H04N 21/458, H04N 21/81, H04N 7/173, H04N 7/10, H04N 7/025

(54) **Method and apparatus for generating alternative content**
Verfahren und Vorrichtung zur Erzeugung von Alternativinhalt
Appareil et procédé pour générer un contenu alternatif

(30) Priority: 26.02.2009 US 393277
(43) Date of publication of application: 01.09.2010
(73) Proprietor: Comcast Cable Communications, LLC, Philadelphia, PA 19103 (US)
(72) Inventor: Holden, Dan, Philadelphia, PA 19103 (US)
(74) Representative: Chew, Kwan Chong Daniel

(56) References cited:
- US-A1- 2002 144 262
- US-A1- 2004 034 874
- US-A1- 2006 080 167
- US-A1- 2006 218 602

## Description

### Field of the Disclosure

The features herein relate to the field of content provision. More particularly, the features herein relate to the utilization of trick files to generate alternate content.

### Background

When individuals watch or listen to prerecorded media content on a television, computer, CD player, etc., such as when viewing a DVD, a videocassette, video on demand (VOD), material recorded on a digital video recorder (DVR), they often skip over portions of the content of the media in which they are not interested.

In connection with digitally recorded media, such as media recorded on a DVR, DVD, CD, or streaming VOD, the media player devices (e.g., CD players, DVD players, DVRs, and network VOD servers) are designed to provide trick modes of operation, such as fast-forward and rewind.

When media is recorded in an analog fashion, such as on an audio or video tape, fast-forwarding, for instance, merely involves moving the tape past the playback heads at a faster speed than normal playback. This will cause the sound and/or video to become highly distorted from the individual's perspective, but still provides enough clarity to decipher the content that is being fast-forwarded through so that the individual can determine when to stop the tape and resume normal playback.

However, in connection with digital media, simply outputting the digital data at a faster rate than during normal playback is not a practical option insofar as the output to the monitoring device would not be perceivable by the individual in any way that would allow the individual to determine the media content that is being fast-forwarded or rewinded through. Rather, the fast-forwarding or rewinding usually requires the use of techniques, commonly termed "trick modes," to achieve a similar effect from the individual's perspective to that of fast-forwarding or rewinding through an analog tape. More particularly, in order for the functions of fast-forward and rewind to be reasonably user friendly, the user must be provided some feedback from the media enabling the user to discern the media content that is being fast-forwarded or rewinded through. Otherwise, the individual would have no idea when to stop fast-forwarding or rewinding in order to view the content that the individual does wish to view.

Accordingly, in response to selection of a trick-mode, such as fast-forward, super fast-forward, rewind, pause, slow play, etc., digital media playback devices, such as CD players, VCRs, DVD players, and video-on-demand (VOD) servers are designed to enter a trick mode of operation. For instance, for fast-forward operation, the device may selectively output pieces of the content in a humanly perceptible form so as to provide an experience to the individual similar to that of fast-forwarding or rewinding through an analog tape so that the individual can perceive the media content, albeit typically in a very distorted fashion, but sufficiently clearly to obtain a general idea of the content that is being fast-forwarded or rewound through.

For instance, in a simple form, this might comprise displaying still images selected from the content at one second intervals (e.g., I-Frames in an MPEG data stream) for 1/4 of a second to provide a fast-forward function at a rate of four times the normal playback speed. The fast-forward speed could be doubled to eight times normal playback by displaying for 1/4 second a still image taken at two second intervals or, alternately, by displaying the still image for 1/8th of a second instead of a 1/4 of a second and keeping the interval between images the same at one second.

One of the more common types of content that individuals tend to skip over are commercials or advertisements. Perhaps the most ubiquitous situation in which this occurs is when individuals record television programs on their DVRs and during the viewing of VOD offerings (as are now commonly available on many subscription-based television service networks, e.g., cable television networks, satellite television networks, and fiber optic television networks). Fast-forwarding through commercials and other content, however, also is common in connection with media content recorded on other media, such as videocassettes, DVDs, content recorded onto a hard disk such as the hard disk of a personal computer (PC), and even streaming video over the Internet or other information network.

The phenomenon of fast-forwarding through commercials and other content is most commonly associated with multimedia content, and particularly television content, but certainly occurs with other types of media content, such as audio content, including, recorded radio programs, podcasts, and other audio content recorded on hard drives, solid-state memory, audio cassette tapes, CDs, DVDs, etc.

Since the fees paid by advertisers for the right to place their advertisements within media content are a substantial source of revenue for media content providers, the proclivity of viewers to fast-forward through commercials is a significant problem for advertisers and content providers alike.

### Summary

Aspects of the invention are set out in the accompanying claims.

Embodiments of the invention relate to methods, systems and apparatus for providing alternate content to consumers of digital media during trick modes of operation comprising generating digital media content in a first file for standard playback for consumption by a consumer, generating at least one trick file corresponding to the first file, the trick file comprising content different than content in the first file, and mapping the trick file to a trick mode of operation in connection with the first file.

In some embodiments, a system herein may respond to a user's trick mode command for a first content by providing a second piece of content, different from the first content. For example, the user may be watching a television program, and upon attempting to fast-forward through a commercial, the user may be provided with a second piece of content, such as another advertisement.

While that second piece of content is being provided to the user, further trick mode requests may be re-mapped to perform different functions. For example, pressing "Fast forward" while viewing the alternative advertisement may cause the display of a second screen of the alternative advertisement, instead of fast forwarding through the original first content. The alternative advertisement may include instructions to explain to the user how the trick mode commands are re-mapped during the display of the alternate advertisement.

In response to the user's trick mode command, the first content may still be displayed in a corresponding trick mode version, and the second content display may be displayed as an overlay atop the first content. The overlay may still permit the user to see the trick mode version of the first content, so, for example, the user can determine when to stop fast-forwarding (e.g., when the commercial break ends). That overlay may be a partial overlay, or a transparent one.

US 2004/0034874 discloses a system for presenting advertisements to a user during video presentations. The system detects a trick mode activation during a media content presentation and then presents an advertisement during a trick mode display of the media content presentation. Each command for trick mode has a predefined function.

US 2006/0218602A discloses a technique for managing video content for a video on demand (VOD) session which involves replacing trick mode content with pre-defined replacement content when a trick mode command is executed. In an embodiment, the replacement content is a replacement advertisement, which may be in the form of a moving image that is displayed as normal speed or a fixed image.

US 2002/0144262 discloses presenting viewers with an alternative brief version of a recorded advertisement when they choose to fast-forward through or skip (or any other trick play event) the recorded advertisement. The alternative advertisement may be displayed instead of or in conjunction with the recorded advertisement (i.e., fast-forwarding advertisement is displayed in one portion of the screen (i.e., background or portion of a split screen) and the alternative brief version is displayed in another portion).

None of these documents disclose remapping the function of a trick play command.

### Brief Description of the Drawings

Figure 1 illustrates an example system on which features described herein may be implemented.
Figure 2 illustrates an example process of trick mode advertising.
Figures 3a-d illustrate example screen displays employing various trick mode advertisement features described herein.
Figure 4 illustrates an example process of trick mode advertising, in conjunction with the screens in Figures 3a-d.
Figure 5 illustrates example hardware components that may be used to carry out the various features described herein.
Figure 6 illustrates an example process of generating and indexing trick mode content.
Figures 7 and 8 illustrate example alternate trick mode details.

### Detailed Description

The features herein include techniques, systems, apparatus, and methods for mapping trick modes of operation in connection with the playback of media content wherein the trick modes of operation are mapped to alternate advertising or other media content. The features will be described hereinbelow primarily in connection with an embodiment in a television service network, such as a cable television network. However, it should be understood that this is merely presented by way of explanation. The features may be implemented in connection with any form of media content, including audio content, video content, and multimedia content, and in connection with any number of delivery mechanisms for such content, including television networks, media delivered via the Internet or another information network, media stored on any digital medium, including, but not limited to, DVDs, CDs, solid-state memory, and hard disk drives such as found in computers and DVRs.

As noted above, any mode of operation of a digital media player device other than standard playback may be known as a trick mode of operation. Trick modes of operation, for instance, include, pause, fast-forward, double fast-forward, triple fast-forward, quadruple fast-forward, rewind, double rewind, triple rewind, quadruple rewind, slow playback, slow rewind, and frame advance. "Start Over" is a relatively new trick mode now offered by some television network providers in which, when a tuner tunes in to a particular program after the program has started, the user may select a "Start Over" option to cause the program to start over from the beginning.

As noted above, a substantial source of revenue in the media production and delivery industries is payment for advertising space within media. This includes, for instance, commercials aired before, after, or in the middle of television programs, advertisements before, after, or in the middle of media delivered via the Internet or other information networks, advertisements placed on recorded media offered directly to, and purchasable by, consumers, such as DVDs and CDs, and advertisements placed within podcasts, etc.

In theory, the advertiser is paying the media content provider for the right to place its advertisement within the media based on the assumption that the consumers who consume the media will view (or hear) the advertisement. However, this often is not the case because most media player devices include trick modes of operation, such as fast-forward, that allow media consumers to essentially skip over the advertisement and, therefore, consumers frequently do exactly that.

This phenomenon therefore leads to a reduction in the value of advertising placed within recorded media.

The features herein offer a technique for increasing the value of advertisements placed within media content by providing a method and apparatus by which an advertisement still can be delivered to the consumer during trick mode operations such as fast-forward. Particularly, as noted above, most digital media players, when a trick mode of operation is selected, output a trick file.

As noted above, in the example of fast-forward, the trick file may comprise I-frames in an MPEG data stream taken at one second intervals and displayed for 1/4 of a second.

There are several ways to provide such trick mode functionality and different media player devices may use different such techniques. For instance, in one such technique commonly used in connection with VOD servers, the actual media content, e.g., a television program, is stored on the network both in its standard format, e.g., a standard MPEG file, and in the one or more trick files. For instance, there may be a different trick file for each different trick mode of operation. Thus, for instance, continuing the example above in which selection of a fast-forward trick mode results in the playing of I-frames at one second intervals for 1/4th of a second, the trick file associated with the original standard MPEG file may be another MPEG file containing the content of the I-frames separated by one second intervals within the original MPEG file displayed for 1/4 second each. Thus, when a consumer watching a program via VOD selects fast-forward, the selection of fast-forward is mapped to the corresponding portion of this trick file so that the VOD server delivers to that consumer the appropriate portion of that trick file, rather than the original standard MPEG file.

In other systems, the trick file is not necessarily created and stored in advance. In one such system, the trick file is created on the fly when the trick mode is selected.

Instead of playing a conventional trick file containing pieces of the content of the original file in response to selection of a trick mode, a trick file containing an alternate advertisement may be played. The illusion of fast-forwarding through the original file can be preserved by, for instance, making the advertisement file much shorter than that the portion of the original content that the consumer is fast-forwarding through. For instance, if an advertiser has purchased a 30 second advertising avail during a television program, the fast forward trick file can present a five second advertisement in its place.

Presumably, although not necessarily, in a practical embodiment, the advertiser that purchased the 30 second avail within the original program content also is given the rights to place alternate advertising in the temporally corresponding portion of the trick file(s). The content provider may charge the advertiser an extra fee to play the alternate advertising during fast-forward operation. Alternately, the content provider may offer the alternate advertising avail free of charge as part of the purchase of the original 30 second avail. In some embodiments, a different alternative advertising trick file may be provided for each different possible trick mode, e.g., fast-forward, double fast-forward, triple fast-forward, rewind, pause, etc. The advertiser may choose to purchase or provide alternate advertising avails during all available trick modes of operation or may choose to purchase alternate advertising spots connection with only some or none of the trick modes of operation. A different alternate advertisement may be provided for each different trick mode. Alternatively, some trick modes may re-use the same alternate advertisements, particularly trick modes having similar "speeds" through the original content (e.g., double fast forward and double rewind). On the other hand, the same advertisement, e.g. a still image advertisement, may be used in any number of different trick modes regardless of "speed" relative to the original content, such as pause, fast forward, double fast forward, etc.

If the advertiser chooses not to take advantage of trick mode alternate advertising in one or more of the trick modes, then more conventional trick mode file content may be generated for those portions of the original file. In other embodiments, however, the content provider may sell those trick mode advertising avails to other advertisers.

In order to best preserve the illusion of fast-forwarding through the material, the advertisement may consume only a portion of the display area, e.g., the center, while the area around the edges of the advertisement appears to be the original content playing at a fast-forward speed. In other embodiments, the alternate trick file advertisements may be slightly transparent with a background that appears to be the original content playing at a fast-forward speed behind the alternate advertisement.

The alternate advertisements may take any number of forms, including, a still image, an ultrashort commercial (like a standard commercial, but very short in duration) or a "speed bump." Speed bump refers to a trick file comprising at its beginning and its end content similar to that of a conventional trick file such as content that makes it appear that the underlying original programming is passing by at a fast pace. However, in the middle, it comprises an advertisement (e.g., a still image for one second).

In accordance with one particular embodiment, the alternate advertising trick file can be configured to tempt the consumer to take further actions. For instance, the alternate advertising may tempt the consumer to operate the media player device in a sequence of trick modes of operation (during each of which, a different advertisement, portion of an advertisement, or prize may be displayed). This can be done in the nature of a game with a prize at the end. For instance, when a user selects fast-forward during a conventional advertisement, an alternate advertisement may be displayed such as any of those described above, but further including instructions to use another trick mode, e.g., double fast rewind, in order to win a prize or see a preview for an upcoming movie or television program. Then, when the user selects double rewind, the user is presented with another trick file, including the aforementioned movie preview or a printable coupon or instructions to visit a website and input a certain code to receive a coupon or an interactive television experience, possibly including the opportunity to purchase merchandise directly online. Alternately, when the consumer selects double rewind, the consumer may be presented with another advertisement that includes an instruction to select yet another trick mode in order to receive some benefit such as a prize or another preview or the second half of the same preview. The possibilities are endless.

In addition to associating a trick mode of operation with an interactive television experience, it is also possible to use the alternate advertising trick files in connection with addressable advertising, that is, advertisements that are individually addressed to specific consumers (as oppose to conventional advertisements that are broadcast to anyone viewing a given program). More particularly, many commercial-based information networks, such as cable television networks, have or are developing technologies that enable the delivery of different advertisements simultaneously to different consumers viewing the same underlying television program. For instance, a household within a neighbourhood having an average home sale price above a certain threshold might receive a commercial for a BMW automobile, whereas another household within a neighbourhood with lower average residential real estate prices may receive a different commercial for a Kia automobile. The alternate advertising received when a trick mode of operation is activated also may be different depending on the specific consumer or consumer demographic profile.

The use of alternate advertising trick files is not limited to presenting the alternate advertising only during the portions of corresponding to advertising content in the original media file. It is possible to provide alternate advertising content to consumers when they are fast-forwarding (or using other trick modes of operation) through non-advertising program content. Again, it usually can be assumed that the consumer is not interested in any underlying original content that the consumer is traversing via certain trick modes of operation such as fast-forward and rewind. Hence, such instances may provide even more advertising opportunities.

Furthermore, it should be understood that the alternate content need not even comprise advertising, but can be any content that is different from the content of the underlying standard file content. That is, a conventional trick file essentially comprises a subset of the standard file to which it corresponds (e.g., a subset of the I frames). The alternate content may replace or supplement the content of a conventional trick file with other content perceivable and, hopefully, of interest to the consumer. It need not be advertising per se.

As noted above, it will usually be desirable to provide some humanly perceivable indication of position within the original content so as to enable the consumer to determine when he or she wishes to return to standard playback mode. This can be accomplished in any of the ways discussed herein above, such as presenting the advertisement only in the middle of the monitor screen with the underlying program content visible around the edges of the advertisement or by making the advertising content partially transparent.

The alternate advertising may comprise content only in one track of the media stream. For instance, during fast-forward, the video stream portion of the media stream may comprise a conventional fast-forward trick file, while only the audio stream comprises advertising content.

In one example, the features herein may be implemented in connection with video on demand (VOD) servers within television service networks, such as cable television networks, by mapping trick modes to trick files containing alternate advertising instead of conventional trick mode files. The features also can be implemented in connection with DVDs, CDs, and other digital recorded media directly purchased by consumers by providing trick files on the DVD, CD, etc. and mapping trick modes of operation to those files. Furthermore, in connection with network-connected DVRs, trick files with alternate advertising may be downloaded and stored to the DVR ahead of time. This can be done behind the scenes without the user's knowledge. For instance, alternate advertising trick files can be downloaded using a second or third alternate tuner in a DVR. Alternately, such advertising trick files can be downloaded to the DVR when the DVR is "off'. In other embodiments, alternate trick files can be downloaded at a certain time of day during which the consumer is unlikely to be watching television.

Alternately, if the network fabric is fast enough, the trick file advertisements need not necessarily be downloaded to the DVR ahead of time, but can be pulled off a network server at the time of selection of the trick mode.

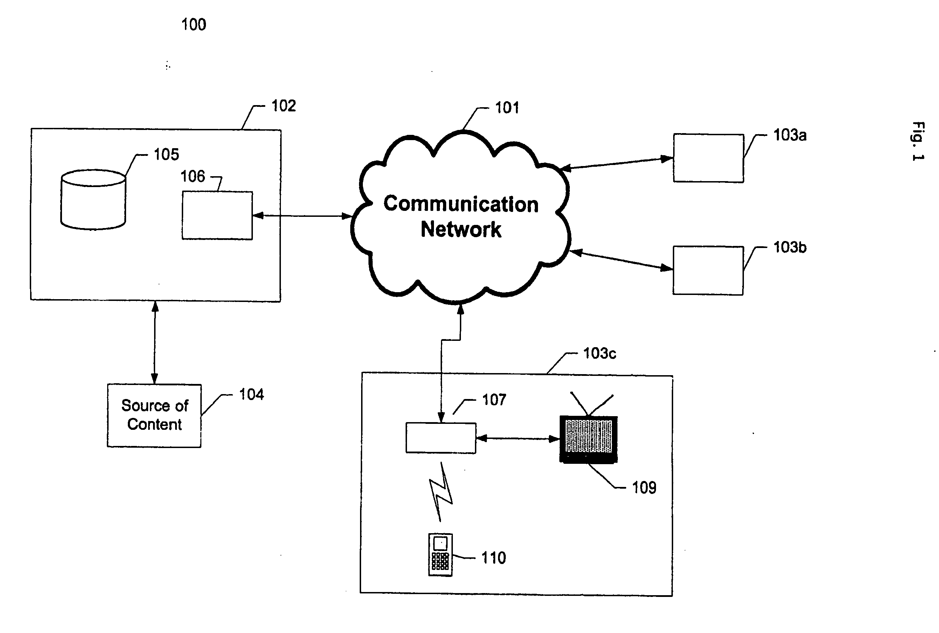

Figure 1 is a diagram of a television service network 100, such as a cable television network, within which the features herein may be implemented. Generally, the network comprises suitable switching and transport fabric 101 (e.g., a communication network linked by coaxial cable, fiber, hybrid-fiber-coaxial cable, satellite link, etc) for providing two way communication between various nodes on the network, including server nodes, such as.a head end 102, and client nodes 103a-c, such as consumer set top boxes. These nodes may all be implemented using computer hardware, such as processors and computer-readable memory (e.g., hard drive, compact disk, FLASH RAM, etc.) storing computer-executable instructions for performing the various features described herein. Often, content is downloaded to a head end node 102 from or via one or more other server-side nodes 104 further upstream in the delivery path, such as a NCC (National Content Center) node.

The head end node 102 includes memory storing a database 105 containing, among other things, video on demand (VOD) selections that are available to subscribers with proper authorization to have transmitted to them at a time of their choosing. The head end 102 further comprises a front end server 106 for sending both video on demand selections as well as broadcast television programs onto the network 101 to the various subscriber nodes 103a-c. The client nodes may comprise consumer nodes, which may be located in residences or businesses, and/or may comprise mobile devices. Node 103c illustrates some detail of one particular consumer node typical of a residential consumer node. The node comprises a set-top box (STB) 107 designed for operation on the network 101. The STB 107 can receive, demodulate and demultiplex television signals and provide the content on a single selected channel to a monitor 108, such as a connected television set. The STB 107 has a built in DVR including a memory, such as a hard drive, for recording television programs. The STB 107 also can transmit signals and data upstream on the network 101 in order to send commands and requests to the head end 102, such as a request for delivery of a particular video on demand program. Typically, a user interfaces with the set-top box 107 via a wireless remote control unit 110. The remote control unit 110 commonly has a plurality of buttons to select, among other things, trick modes of operation for video on demand content and recorded content during playback from the memory of the DVR-STB.

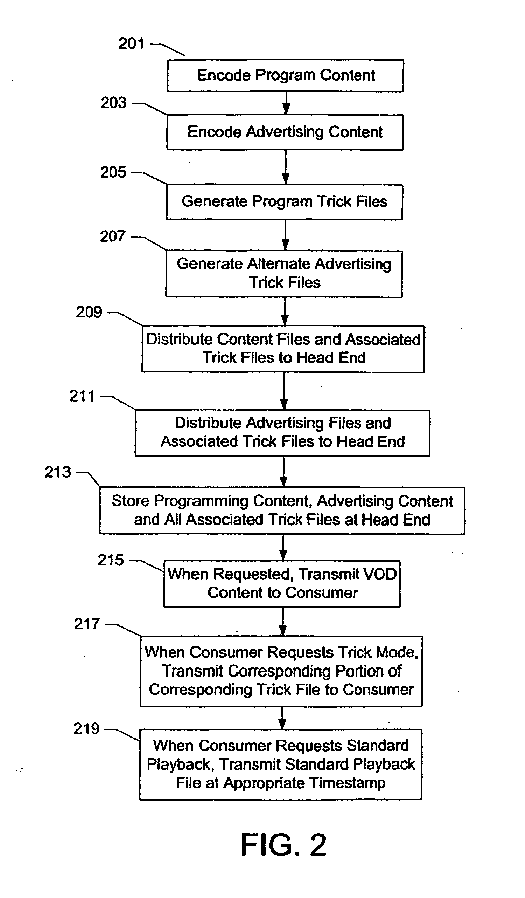

Figure 2 is a diagram illustrating operation in accordance with one embodiment. Again, we shall consider an example in connection with playback of video-on-demand content from a server-side node within a cable television network. However, again, this is merely exemplary. The features herein are not limited to television programming, television networks, VOD, or even video content, but are applicable to any type of media content, including, but not limited to, audio content, video content, and multimedia content. It also may be implemented in connection with any delivery mechanism, including, but not limited to, television service networks, the Internet, CDs, DVDs, podcasts, etc.

As will be seen in the flow diagram and as is typical in connection with television content, the program content is generated and delivered to a head end separately from the advertising content. Encoded program content as well as encoded advertising content may be delivered to one or more computers at a file generation center (steps 201 and 203). For an MSO (multi-system operator), this may be a national content center from which it distributes all of its content to regional content centers and therefrom to individual head ends. In any event, conventional trick files may be generated for the programming content (step 205). Likewise, alternate advertising trick files may be generated containing alternate advertising content (step 207). A different alternate advertising trick file may be provided for each possible trick mode of operation, or may be provided for less than all trick modes of operation. If alternate advertising trick files are not provided for some trick modes, then conventional trick files can be created for those modes of operation. A trick-file may be the video a consumer experiences when they activate a trick mode, e.g. fast forward. When trick-file video is streamed, it gives the illusion of a VCR running in faster than normal mode. One method for the creation of a trick-file is to extract all I-Frames then create a new file comprised of fewer frames than the original video. For instance, a thirty second spot encoded to VOD specifications would contain exactly 900 frames of video. In order to play the spot in five seconds 750 frames of video would be removed in order to reach a total frame count of 150.

There are several methods for generating VOD trick file displays: files, indexes, and dynamic video generation. One method, the "file" method, creates a new trick file (video file) that is played when a trick mode is activated. A second method, the "indexing" method, is a similar approach. However, rather than creating a new video file, indexes are assigned to frames of the original video. These indexes are utilized by the video pump to select the correct frames to display in order to achieve a fast forward effect. A third method, "dynamic video generation," does not necessarily generate a new file prior to the trick play request, and instead dynamically calculates how many frames to skip in real-time as the original video is played during the trick mode.

In any event, the original content as well as the corresponding trick files may be distributed to one or more computers at a content center such as a head end (step 209). Likewise, the conventional advertising files as well as the alternate advertising trick files also may be delivered to the one or more computers at a content center such as a head end (step 211). The content center stores the programming content, advertising content, and all of the corresponding trick files (step 213).

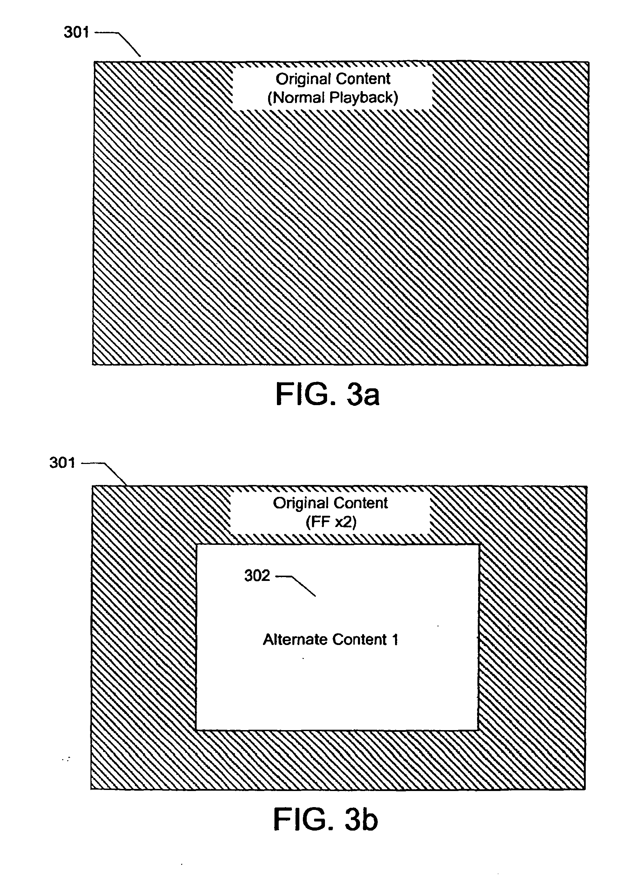

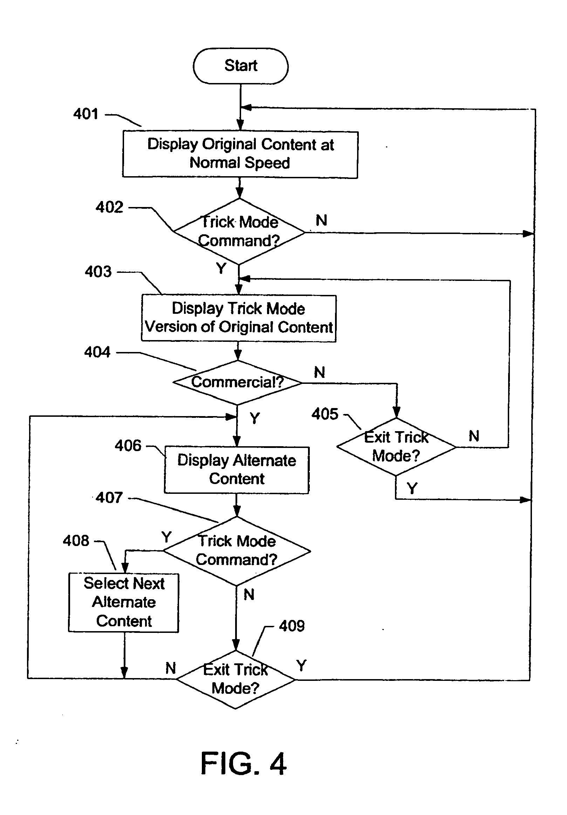

When a consumer at a client-side node, such as an STB, PC, cell phone, or other media play device selects to view a particular VOD selection, a VOD server transmits the corresponding content to the consumer's device (step 215). If the consumer selects a trick mode of operation, the VOD server ceases transmission of the standard media content file and starts transmitting the corresponding portion (in terms of time stamp) of the trick file corresponding to the selected trick mode (step 217). For example, if the user chose to fast-forward at 4x speed, the 4x speed trick file for the program may be transmitted. When the consumer selects standard playback mode again, the VOD server ceases transmission of the trick file and commences transmission of the standard file again at the appropriate time stamp (step 219). [0051 ]Figures 3a-d illustrate example display screens that can be presented to the user, and Figure 4 illustrates an example process in which these screens may appear. These will be described together, following the Figure 4 process. The process steps may be performed by a computer processor system at a source of content (e.g., at a cable headend, or a user's media playback device (CD player, set-top box, DVD player, etc.)) In step 401, the system may begin by displaying original content at normal playback speed to a user. This may occur, for example, when a user requests a particular program using a set-top-box, or presses a "Play" button on a DVD player. The screen may appear as shown in Figure 3a, with original content 301 being displayed at normal playback speed.

In step 402, the system may check to determine whether the user has entered a trick play command. The trick play command may be any request to alter the playback operation of the original content. For example, the trick play command may be a fast-forward command entered on a remote control. If no such command has been received, the process may return to step 401, and the system may continue to display the original content at its normal playback speed.

If, in step 402, a trick play command was received, then the system may proceed in step 403 with displaying the trick mode version of the original content. This may be accomplished, for example, by a head-end transmitting a different stream for the original content, having periodic frames from the content appearing at a different speed corresponding to the trick play command (e.g., a request to view fast-forward 2x speed may result in the trick mode version displaying frames of the original content at twice the frequency of normal speed). That trick mode version may then occupy the screen, replacing the normal speed version from Fig. 3a. In the Fig. 3b example, the original content may be displayed as a double speed (2x) fast-forward, in response to a fast-forward command. As will be explained below, this trick mode version of the original content may be displayed as a background to alternative content, depending on the position or time within the original content that the trick mode request was made.

Then, in step 404, the system may check to determine what portion of the original content was being viewed at the time the trick play command was entered. This determination may be useful, for example, because the system may wish to permit typical trick play functionality for some portions of the original content, and may wish to display alternate content for other portions of the original content. For example, if the original content is a recording of a broadcast television program, with the commercials that aired during the original broadcast, the system may only wish to display alternate content if the user attempts to fast forward through the commercials. If the user simply wishes to fast forward through other portions of the original content (e.g., the parts other than commercials), then the system may wish to simply allow the operation, without displaying alternate content. Alternatively, the system may select trick mode content that corresponds to the original content position (e.g., if the user fast forwards through the opening segment of a program, the alternative advertising content may contain promotional information for the program, such as other air times, actor appearances, etc.).

If, in step 404, the trick play command was not entered during an alternate trickplay portion (e.g., the command was not entered during a commercial in a recorded television program), the system may continue to display the trick mode version of the original content, and may proceed to step 405 to determine whether the user has requested to exit the trick play mode. The user may do this, for example, by pressing a "Play" button on the remote control. If the user has not chosen to exit the trick play mode, the process may return to step 403, and the trick play mode version continues to be displayed. If the user has chosen to exit the trick play mode, then the process may return to step 401, and the original content may be displayed once again at normal speed. Of course, these steps may be modified to permit the user to enter additional trick play modes (e.g., going from 2x to 4x speed) - the Figure 4 process is simply an example.

If, in step 403, the system determines that the trick mode command was received during an alternate trickplay content portion of the original content (e.g., while a commercial was playing from the original content, or for any portion for which an alternate trickplay content is defined), the system may proceed to step 406, and alternate content may be displayed. This alternate content may be any desired type of content that is different from the original content. For example, the alternate content may be an advertisement, separate video program, etc. The alternate content may be still video, motion video, audio, and/or a mix of both audio and video. The Fig. 4 example, in step 406, causes the display of alternate content. Figure 3b shows one example of how such alternate content may be displayed. As illustrated there, the alternate content 302 may be superimposed over a portion of the original content 301 (which may itself be displayed a the trick play speed, such as 2x fast forward). Figure 3b shows the alternate content 302 displayed overlaying a central portion of the trickplay version of the original content, but other arrangements may be used (e.g., the alternate content 302 may be displayed as a picture-in-picture window, or at a corner, or in any other desired location and arrangement). The alternate content portion may also be spatially differentiated from the original content using, for example, a linear border, frame, separation lines, gaps, etc.

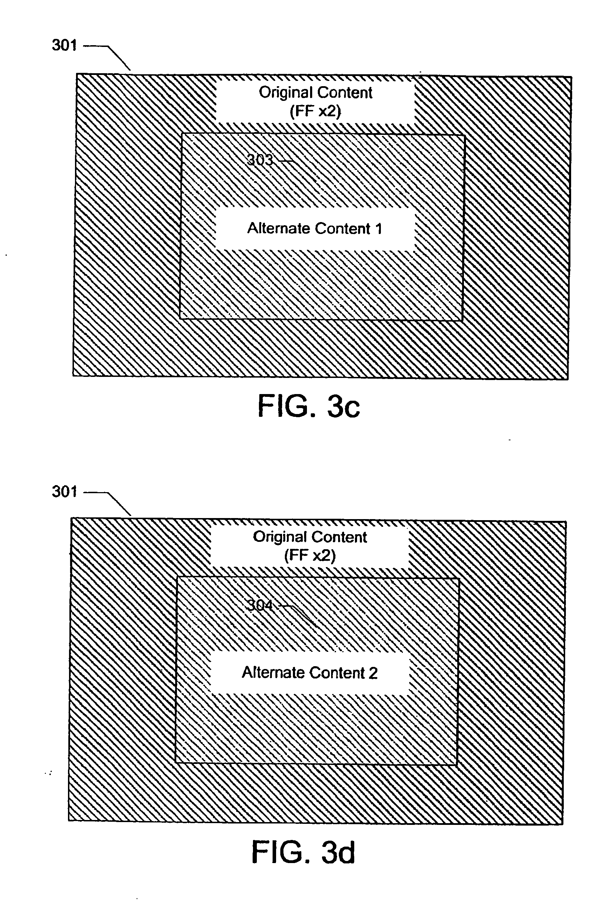

The alternate content may be opaque, and may obscure portions of the original content 301. Alternatively, the alternate content may be displayed with a predetermined amount of transparency, to allow the original content to remain visible through the alternate content. Figure 3c illustrates an example in which alternate content 303 is transparent. By allowing the user to view the trickplay version of the original content (e.g., around the outside of the alternate content, and through the alternate content if that content is transparent), the user can still know where they are in the content (e.g. how far into the commercial break they are) and can ensure that he/she can return to normal playback speed at the appropriate time (e.g., when the television program resumes after a commercial break).

During the trick play operation, the various trickplay commands on the user's remote control may be reassigned to allow interaction with the alternate content, or to otherwise have functionality different from its original functionality (e.g., the trick play mode can be analogized to the "ALT" key on a computer keyboard, where alternative functions may be mapped to the keys). In step 407, the system may determine whether the user has entered another trickplay command. In some embodiments, the displayed alternate content may include a prompt to the user, informing the user that one or more of the trickplay commands on the remote control may be used to interact with the alternate content window, and not the trickplay version of the original content being displayed in the background. For example, while the alternate content is displayed 406, the system may re-map the remote control's trickplay commands to perform some other commands besides trickplaying through the original content. So, for example, pressing the fast-forward button while the alternate content is being displayed may result in displaying another screen of alternate content (instead of fast-forwarding through the original content), ordering an advertised product, requesting additional information, or any other desired action.

The alternate content may be linear content, such as a short piece of video played in a linear fashion. Or, the alternate content can be non-linear, and may be navigated by the user, displaying different screens in response to user commands (e.g., cursor commands on the remote control, or using re-mapped trickplay commands). In some embodiments, the alternate content may be a user interface, such as an Internet web page or DVD menu, and the various buttons on the remote control may be used to navigate through this alternate content, displaying additional alternate screens as the user interacts with the interface.

If the user has entered such a trick play command, the system may proceed to step 408, and act on the re-mapped trickplay command. In the illustrated example, the system may respond to the re-mapped trickplay command (e.g., another fast-forward command) by selecting another piece of alternate content for display. That other piece may be, for example, another screen advertisement. After selecting the next piece of alternate content, the system may return to step 406, and display that other piece of alternate content. Figure 3d illustrates an example alternate content 304, taking the place of the previous alternate content 303, and showing that the original content continues to be played in the initial trick mode (FF x2). Alternatively, the remapped trickplay command may also carry its original meaning for purposes of controlling the original content being viewed in the background. So, for example, pressing "Fast-Forward" from the Fig. 3 c state may result in advancing the alternate content to the next piece of alternate content, and also increasing the fast-forward speed of the original content (e.g., making it a FFx3 display). In this manner, the re-mapped trickplay commands may still be used to control the original content while navigating the alternate content.

Other commands may also be entered. For example, in step 409, the system may determine whether the user has entered a command (e.g., pressing "Play") to exit the trick play mode. If such a command has been received, the system may return to step 401, and may resume displaying the original content at normal speed. The decision to exit trick play mode may be made based on a command other than a user input on a remote control. For example, exiting trick mode in step 409 may occur in response to satisfaction of a predetermined requirement of the alternate content (e.g., displaying for a predetermined period of time, such as 2 seconds, or of the original content reaching a predetermined portion in the program, such as returning from a commercial break). If the command to exit was not received in step 409, then the system may return to step 406, and may continue displaying the alternate content.

It will be understood by those skilled in the related arts that the description above is simplified and, particularly, omits much of the conventional aspects of the overall operation of video delivery over a network. Merely as one example, these skilled in the related arts will understand that during both conventional playback and trick file playback, multiple files may be played sequentially. For instance, as noted in the flow diagram itself, the advertising content and the program content are commonly stored as separate files, and those files are assembled and/or transmitted only at the time of delivery to the consumer.

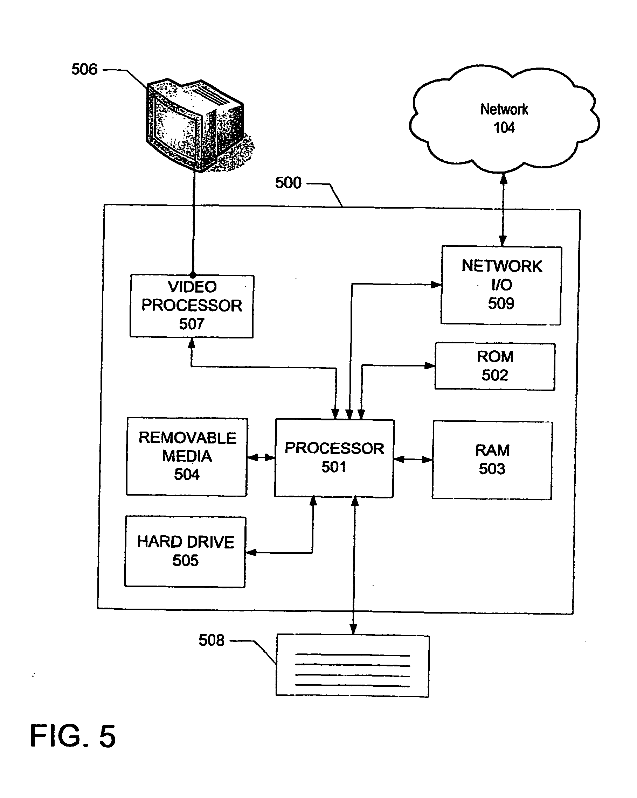

The features herein may be implemented by suitable software embodied on a computer readable medium such as a DVD-ROM, CD-ROM, solid state memory, floppy disk, magnetic tape, hard drive, etc, and running on a digital processing device, such as a general purpose computer, a microprocessor, a digital signal processor (DSP), etc. Alternately, the features herein may be implemented by other well known techniques and/or apparatus for processing data, including, but not limited to, combinational logic circuits, state machines, application specific integrated circuits (ASICs), field programmable gate arrays (FPGAs), analog circuits, and combinations thereof. Any form of digital memory may be used to store the alternate advertising trick files and other files, including, but not limited to, DVD, CD, solid state memory, floppy disk, hard drive, magnetic tape, etc. All of the components described above (e.g., nodes, servers, and other elements) may be implemented on a computing device having one or more processors configured to execute computer-executable instructions stored in a memory, such as internal RAM, of the computing device to perform the recited functions. Figure 5 illustrates the general hardware elements of such a computing device 500. The computing device 500 may include one or more processors 501, which may execute instructions of a computer program to perform any of the features described herein. Those instructions may be stored in any type of memory, to configure the operation of the processor 501. For example, instructions may be stored in a read-only memory (ROM) 502, random access memory (RAM) 503, removable media 504, such as a Universal Serial Bus (USB) drive, compact disk (CD) or digital versatile disk (DVD), floppy disk drive, or any other desired electronic storage medium. Instructions may also be stored in an attached hard drive 505. The computing device 500 may include one or more output devices, such as a display 506, and may include one or more output device controllers 507, such as a video processor. There may also be one or more user input devices 508, such as a keyboard, mouse, touch screen, microphone, etc. The computing device 500 may also include one or more network input/output circuits 509, such as a network card to communicate with network 104. The network interface may be a wired interface, wireless interface, or a combination of the two. In some embodiments, the interface 509 may include a cable modem, and network 104 may include a cable television system's coaxial, fiber, or hybrid fiber/coaxial distribution system. In some embodiments, the network caches may be implemented in memory space allocated to the network interface 509.

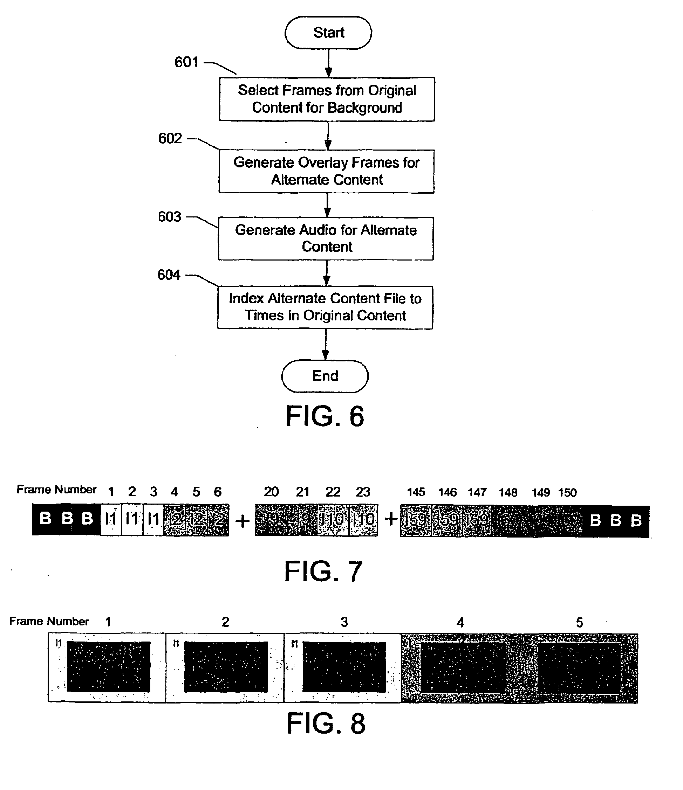

As noted above, there are several approaches to generating trick play content. The alternate content may also be generated in a variety of ways. For example, a "file based" approach may involve generating a separate file that is streamed or played when the user selects the trickplay operation. Figure 6 illustrates an example method for the file based approach.

First, in step 601, selected frames from the original content may be chosen for the fast-forward effect that will appear in the background. For example, a normal two minute break has 3600 frames of video. To run the break in the 20 seconds that simulate a fast-forward mode, the original 3600 frames of advertising may be cut to 600 frames of video. This decrease in frames is suitable since the background video will only be utilized to track original programming. Step 601 may extract every 6th frame of the original content, to assemble the 600 frames of the fast-forward version. The present example assumes this 1/6th ratio between the original break length and the trick mode break length, but no such ratio is required. For example, the duration of the alternate content may be independent of the original break, and need not be a predetermined limited time. For example, the user could navigate through many pieces of alternate content, and as long as the user is actively engaged with the alternate content (e.g., pressing a trick mode key once every 5 seconds), the system may allow the alternate content to be continuously displayed. The original content may be displayed in the background at the trick mode speed, but when it is ready to resume the normal display, it may simply be paused in the background to await the user's exiting of the alternate trick mode display.

As another example, a 30-second spot encoded as an MPEG-2 transport stream may have a long GOP (group of pictures) set to 15, with 30 frames per second, resulting in a total of 900 frames. Bookending the advertisement with 12 frames of black (to allow smoother viewer transition) results in a total of 912 frames for the original content advertisement.

Based on the specifications above, approximately 601-frames would be extracted from thirty seconds of video. In the Fig. 7 illustration of this example, the I-frames are put into buckets labeled "II" to "160." Creating a five second trick-file ad will require a total of 150 frames of video (5 seconds * 30 frames/second). If each bucket is filled by replicating I-frames within the bucket, after one iteration a total of 120 frames would be accumulated in the sixty buckets. This would result in a trick-file of approximately 120 frames, thirty frames short of the 150-frame objective. The next step would be to replicate I-Frames in thirty random, or other fashion; buckets in order to achieve our target of 150 frames of video. Finally, bookends are added to the file to provide optional frames of black for smooth video transition. As all black frames are equivalent, they are collectively referred to as "B" in Fig. 7. This process results in having the original 912 frames of video reduced to 156 frames of video that will run in five seconds. This new file may then be used to provide the background video of the original spot running in fast forward mode.

Then, in step 602, the replacement content may be added as an overlay on the original content. As noted above, the overlay may be delineated using a border, such as a black line. Following the example above, the replacement content may need to be exactly 150-frames, to correspond to the fast-forwarding original content. For example, these frames may be labeled "Al" through "A150," as illustrated in Fig. 8. Each of these I-Frames may have dimensions slightly smaller than the I-Frames from the trick-file background video. The Fig. 8 diagram is representative of the first five frames in the newly assembled trick-file advertisement.

Once the video has been correctly assembled, the next step 603 may be to add the audio track. Then, the newly created elementary stream may be wrapped with an MPEG-2 transport stream component. Now it is ready for distribution to VOD pumps, DVRs, or other CE devices. This algorithm can be adapted to support a wide range of durations.

Then, in step 604, the alternate content may be indexed with the corresponding positions within the original content. For example, an index for the original content may identify times during which a fast-forward command will result in the display of alternate content. One index entry may indicate that, for a commercial break appearing between the 12- and 14-minute marks of a program, a fast-forward request is to result in playing "alternate content A." These steps may be repeated as often as desired, depending on the amount of alternate content to be associated with a given piece of original content.

The description of the "file-based" method above is just one way in which the alternate trick play content may be generated. Another approach may involve performing the process dynamically, in response to a trick play request, to dynamically generate the new trick play content (e.g., background original content with foreground alternate content). This dynamic assembly may be performed by a VOD video pump, which may dynamically generate and insert the necessary alternate trick play content.

Additionally, the alternate trick play content files may be supplied to subscriber units (e.g., their DVRs), and those units may be configured with executable software to generate and/or display the necessary alternate content at the appropriate time. In some embodiments, no separate trick files need to be generated at all. For example, if the user's set-top-box includes picture-in-picture capability, the headend 102 may simply transmit an instruction to the STB 107, informing the STB of the new trick play mode and identifying the location (e.g., another data stream, an Internet location, a stored location within the STB memory, etc.) for the alternate content, and the STB 107 may dynamically generate the trickplay version of the original content, and superimpose the alternate content as described above.

As another feature, the capabilities of trick file advertising can incorporate a number of advanced features in a two-way operating environment. For example, trick modes may be captured as state changes on the VOD platform and then mapped to specific functionality. For example, a computer at the headend 102, or the STB 107, may maintain state information identifying the viewer's current viewing state (e.g., watching NBC live, paused, etc.), and each state may be associated with predefined functionality (e.g., displaying alternate content, displaying trick mode versions of content, etc.). This type of state machine will allow for the creation of a contest that is embedded within the content. One type of contest could be an Easter egg hunt, where video widgets may be placed across the span of content and accumulated into a basket, much like a shopping cart on the web. Each of these interactions would be captured and persisted. Once the consumer has interacted with all of the specified widgets they would be notified of contest results. Such contests may also require certain user inputs, such as entering a predetermined sequence of trick play commands after the alternate trick play content has begun (e.g., pressing "fast-forward" twice and "rewind" once).

## Claims

1. A method of providing alternate content to consumers of digital media during trick modes of operation in which first content (301) is provided for standard playback to a consumer and a consumer request for a trick mode operation on the first content is received, comprising:
in response to the consumer request for the trick mode operation on the first content, providing second content(302), different from the first content, for playback to the consumer, wherein the second content comprises instructions to the consumer regarding re-mapping of one or more trick mode commands to become navigation commands to navigate through different screens of the second content.

2. The method of claim 1 wherein the first content is a video program, and the second content comprises alternate advertising.

3. The method of claim 1 or claim 2 further comprising:
receiving a further consumer request for a trick mode operation during presentation of the second content; and
responding to the further consumer request for a trick mode operation by providing additional alternate content(304) to the consumer, wherein responding to the further consumer request for a trick mode operation doesnot alter the presentation of the first content.

4. The method of claim 1, further comprising providing the second content as an overlay over the trick mode version of the first content, wherein the second content overlay may still permit the consumer to perceive at least a portion of the first content.

5. The method of claim 4 wherein the second content is a partially transparent overlay over the first content.

6. The method of any preceding claim wherein the second content comprises alternate advertising that corresponds temporally to portions of the first content.

7. The method of any preceding claim further comprising:
transmitting the first content and the second content over a network (104) to a client node (500) of the network; and
storing the first content and the second content on a storage device (505) at the client node.

8. The method of claim 1, wherein the instructions include instructions for a sequence of trick mode commands that a consumer may enter to win a game and obtain a prize.

9. The method of claim 1, further comprising:
mapping different advertising from different advertisers to rewind and fast-forward trick modes.

10. The method of claim 1, further comprising determining a portion in the first content for which a trick mode operation will result in providing typical trickplay functionality, and not the second content.

11. One or more computer-readable media (502, 503, 504, or 505), storing computer-executable instructions that, when executed, cause the following to occur when first content (301) is provided for standard playback to a consumer and a consumer request for a trick mode operation on the first content is received:
in response to the consumer request for the trick mode operation on the first content, providing second content (302), different from the first content, to the consumer, wherein the second content comprises instructions to the consumer regarding re-mapping of one or more trick mode commands to become navigation commands to navigate through different screens of the second content.

12. The one or more computer-readable media of claim 11, storing computer-executable instructions that, when executed, cause the method of any of claims 1 to 10 to occur.

## Patentansprüche

1. Verfahren zum Bereitstellen eines alternativen Inhalts für die Verbraucher von digitalen Medien während des Trick - Modus - Betriebs, in dem ein erster Inhalt (301) für eine normale Wiedergabe zu einem Verbraucher zur Verfügung gestellt wird und von dem Verbraucher bei Anforderung des Trick - Modus - Betriebs der erste Inhalt empfangen wird, umfassend:
als Reaktion auf die Verbraucheranforderung für den Trick - Modus - Betrieb für den ersten Inhalt, Bereitstellen eines zweiten Inhalts (302), der sich zur Wiedergabe an den Verbraucher von dem ersten Inhalt unterscheidet, wobei der zweite Inhalt Befehle an den Verbraucher über die Neuabbildung eines oder mehrere Trick - Modus - Befehle für weitere Navigationsbefehle umfasst, um durch verschiedene Bildschirmabbildungen des zweiten Inhalts zu navigieren.

2. Verfahren nach Anspruch 1, wobei der erste Inhalt ein Videoprogramm und der zweite Inhalt abwechselnde Werbeinhalte sind.

3. Verfahren nach Anspruch 1 oder Anspruch 2 ferner umfassend:
Empfangen einer weiteren Anforderung für einen Trick-Modus-Betrieb durch den Verbraucher während der Präsentation des zweiten Inhalts und
als Reaktion auf die weitere Anfrage für einen weiteren Trick - Modus - Betrieb durch den Verbraucher, die Bereitstellung eines zusätzlichen, alternativen Inhalts (304) für den Verbraucher, wobei die Reaktion auf die weitere Verbraucheranfrage für einen Trick - Modus - Betrieb wird die Präsentation des ersten Inhalts nicht verändert.

4. Verfahren nach Anspruch 1, ferner umfassend das Bereitstellen des zweiten Inhalts als Overlay über die Trick - Modus - Version des ersten Inhalts, wobei die zweiten Overlay - Inhalte dem Verbraucher es ermöglichen, um zumindest noch einen Teil des ersten Inhalts erkennen zu können.

5. Verfahren nach Anspruch 4, wobei der zweite Inhalt als ein teilweise transparentes Overlay über dem ersten Inhalt ausgebildet wird.

6. Verfahren nach einem der vorhergehenden Ansprüche, wobei der zweite Inhalt alternative Werbung umfasst, die in zeitlichen Abschnitten dem ersten Inhalt entspricht.

7. Das Verfahren nach einem der vorhergehenden Ansprüche, ferner umfassend:
Übertragen des ersten Inhalts und des zweiten Inhalts über ein Netzwerk (104) an einen Kunden - Netzwerkknoten (500) eines Netzwerks; und
Speichern der ersten Inhalte und der zweiten Inhalte auf einem Speichergerät (505), das dem Kunden - Netzwerkknoten zugeordnet werden kann.

8. Verfahren nach Anspruch 1, wobei die Anweisungen für eine, von dem Verbraucher eingegebenen Folge von Trick - Modus - Befehlen erfolgt, um ein Spiel zu gewinnen und um darauf hin einen Preis zu erhalten.

9. Verfahren nach Anspruch 1, ferner umfassend:
die Zuordnung von verschiedenen Werbeinhalten von unterschiedlichen Werbetreibenden für die Vorspul- und Trick - Modus Wiedergabearten.

10. Verfahren nach Anspruch 1, ferner umfassend das Bestimmen eines Abschnitts in dem ersten Inhalt, für einen Trick - Modus - Betrieb, in dem es nicht zum dem Anzeigen des zweiten Inhalts kommt, sondern zur Bereitstellung der typischen Funktionalität des Trick - Modus - Betriebs.

11. Ein oder mehrere computerlesbare Medien (502, 503, 504 oder 505), zum Speichern von computerausführbaren Anweisungen die, wenn sie ausgeführt werden, bewirken, dass folgendes auftritt, wenn der erste Inhalt (301) für eine normale Wiedergabe einen Verbraucher vorgesehen ist und der Verbraucher eine Anfrage für einen Trick - Modus - Betrieb auf dem ersten Inhalt anfordert folgende Reaktion erhält:
als Reaktion auf die Anforderung des Verbrauchers für den Trick - Modus - Betrieb während des ersten Inhalts, Bereitstellen eines zweiten Inhalt (302), der sich für den Verbraucher von dem ersten Inhalt unterscheidet, wobei der zweite Inhalt Befehle umfasst, die der Verbraucher über eine neu Abbildung ein oder mehrere Trick - Modus - Befehle als Navigationsbefehle verwenden kann, um mit auf dem Bildschirm angezeigten, verschiedenen Bildschirmwiedergaben des zweiten Inhalts zu navigieren.

12. Das eine computerlesbare Medium oder die computerlesbaren Medien nach Anspruch 11, Speichern von computerausführbaren Anweisungen, die, wenn sie ausgeführt werden, das Verfahren nach einem der Ansprüche 1 bis 10 zur Ausführung veranlassen.

## Revendications

1. Procédé pour fournir un contenu alternatif à des consommateurs de médias numériques pendant des modes d'utilisation spéciaux, dans lequel le premier contenu (301) est fourni pour une lecture standard à un consommateur et une requête consommateur pour une utilisation en mode spécial sur le premier contenu est reçue, comprenant les étapes consistant à :
en réponse à la requête consommateur pour l'utilisation en mode spécial sur le premier contenu, fournir un second contenu (302), différent du premier contenu, pour une lecture au consommateur, dans lequel le second contenu comprend des instructions pour le consommateur concernant la re-mise en correspondance d'une ou plusieurs commande(s) en mode spécial pour devenir des commandes de navigation pour naviguer au travers de différents écrans du second contenu.

2. Procédé selon la revendication 1 dans lequel le premier contenu est un programme vidéo et le second contenu comprend une publicité alternative.

3. Procédé selon la revendication 1 ou la revendication 2, comprenant en outre les étapes consistant à :
recevoir une autre requête consommateur pour une utilisation en mode spécial pendant la présentation du second contenu ; et
répondre à l'autre requête consommateur pour une utilisation en mode spécial en fournissant un contenu alternatif additionnel (304) au consommateur, dans lequel la réponse à l'autre requête consommateur pour une utilisation en mode spécial n'altère pas la présentation du premier contenu.

4. Procédé selon la revendication 1, comprenant en outre la fourniture du second contenu comme une superposition par-dessus la version en mode spécial du premier contenu, dans lequel la superposition du second contenu peut encore permettre au consommateur de percevoir au moins une portion du premier contenu.

5. Procédé selon la revendication 4 dans lequel le second contenu est une superposition partiellement transparente par-dessus le premier contenu.

6. Procédé selon l'une quelconque des revendications précédentes dans lequel le second contenu comprend une publicité alternative qui correspond dans le temps à des portions du premier contenu.

7. Procédé selon l'une quelconque des revendications précédentes, comprenant en outre les étapes consistant à :
transmettre le premier contenu et le second contenu sur un réseau (104) vers un noeud client (500) du réseau ; et
stocker le premier contenu et le second contenu sur un dispositif de stockage (505) sur le noeud client.

8. Procédé selon la revendication 1 dans lequel les instructions incluent des instructions pour une séquence de commandes en mode spécial qu'un consommateur pourra entrer pour gagner un jeu et obtenir un prix.

9. Procédé selon la revendication 1, comprenant en outre l'étape consistant à :
mettre en correspondance différentes publicités venant de différents annonceurs pour faire rembobiner et avancer rapidement les modes spéciaux.

10. Procédé selon la revendication 1, comprenant en outre la détermination d'une portion dans le premier contenu pour laquelle une utilisation en mode spécial entraîne la fourniture d'une fonctionnalité de lecture spéciale typique, et non le second contenu.

11. Un ou plusieurs média(s) lisible(s) par ordinateur (502, 503, 504 ou 505) stockant des instructions exécutables par ordinateur qui, lorsqu'elles sont exécutées, font que les événements ci-après se produisent lorsque le premier contenu (301) est fourni pour une lecture standard à un consommateur et une requête consommateur pour une utilisation en mode spécial sur le premier contenu est reçue :
en réponse à la requête consommateur pour l'utilisation en mode spécial sur le premier contenu, la fourniture d'un second contenu (302), différent du premier contenu, au consommateur, dans lequel le second contenu comprend des instructions pour le consommateur concernant la re-mise en correspondance d'une ou plusieurs commande(s) en mode spécial pour devenir des commandes de navigation pour naviguer au travers de différents écrans du second contenu.

12. Le média lisible par ordinateur de la revendication 11, au nombre d'un ou plus, stockant des instructions exécutables par ordinateur qui, lorsqu'elles sont exécutées, font que le procédé selon l'une quelconque des revendications 1 à 10 intervient.
